**Europäisches Patentamt**

**European Patent Office**

**Office européen des brevets**

(19)

(11) Veröffentlichungsnummer: **0 260 629 B1**

(12) **EUROPÄISCHE PATENTSCHRIFT**

(45) Veröffentlichungstag der Patentschrift: **15.05.91**

(51) Int. Cl.5: **F24H 9/20, G05D 23/19**

(21) Anmeldenummer: **87113369.0**

(22) Anmeldetag: **12.09.87**

(54) **Wärmespeicherheizgerät und Verfahren zur Regelung der Raumtemperatur.**

(30) Priorität: **17.09.86 DE 3631525**

(43) Veröffentlichungstag der Anmeldung:
**23.03.88 Patentblatt 88/12**

(45) Bekanntmachung des Hinweises auf die
Patenterteilung:
**15.05.91 Patentblatt 91/20**

(84) Benannte Vertragsstaaten:
**AT BE CH DE ES FR GB GR IT LI LU NL SE**

(56) Entgegenhaltungen:
**CH-A- 498 343**
**DE-A- 3 427 523**
**GB-A- 2 154 313**

(73) Patentinhaber: **tekmar Angewandte Elektronik
GmbH & Co. KG
Dückerstrasse 4
W-4300 Essen 1(DE)**

Patentinhaber: **KKW Kulmbacher Klimageräte-
Werk GmbH
Am Goldenen Feld 18
W-8650 Kulmbach(DE)**

(72) Erfinder: **Latarius, Hans
Dückerstrasse 4
W-4300 Essen 1(DE)**
Erfinder: **Kaim, Leo
Wolfersdorfer Strasse 4
W-8647 Stockheim(DE)**

(74) Vertreter: **Zenz, Joachim Klaus, Dipl.-Ing. et al
ZENZ & HELBER Patentanwälte Am Ruhrstein 1
W-4300 Essen 1(DE)**

## Beschreibung

Die Erfindung bezieht sich auf ein Wärmespeicherheizgerät zur Beheizung von Räumen, mit einem Gehäuse, einem in wenigstens einer Hauptkammer des Gehäuses angeordneten Speicherkern, einem in einer Gehäuse-Vorkammer angeordneten Gebläse zur Zwangsumwälzung von Raumluft durch den Speicherkern und mit einer Anordnung zur Raumtemperaturregelung, die einen von außen bedienbaren Raumtemperatur-Sollwertsteller und einen Temperaturfühler zur Bestimmung der Raumtemperatur aufweist und den Betriebszustand des Gebläses steuert. Ferner bezieht sich die Erfindung auf ein Verfahren zur Regelung der Raumtemperatur durch Regelung des Gebläsemotors eines Wärmespeicherheizgerätes.

Bei herkömmlichen elektrischen Wärmespeicherheizgeräten ist ein Raumtemperaturfühler in Form eines Thermostaten zumeist außerhalb und entfernt von dem Gehäuse des Wärmespeicherheizgeräts angeordnet, um die Raumtemperatur möglichst unabhängig von der Geräteabstrahlung erfassen zu können.

Aus der DE-A-34 27 523 sind bei einem Wärmespeicherheizgerät und einem Verfahren der oben genannten Art Temperaturmeßfühler innerhalb des Speicherheizgeräts angeordnet. Die Raumtemperatur wird von einem Temperaturmeßfühler erfaßt, der im dynamischen Entladungszustand (Gebläse eingeschaltet) mit vom Gebläse angesaugter Raumluft und im statischen Zustand (Gebläse ausgeschaltet) mit durch Konvektion oder einen gesonderten Hilfslüfter angesaugter Raumluft beaufschlagt wird. Die in den beiden Betriebsphasen (dynamischer und statischer Zustand) unterschiedlichen thermischen Einflüsse auf den Raumtemperaturmeßfühler werden durch Signalanhebung im dynamischen Betriebszustand und/oder Signalabsenkung im statischen Betriebszustand mit Hilfe einer Kompensationsschaltung kompensiert.

Das Maß der von der Kompensationsschaltung simulierten Temperaturanhebung oder -absenkung ist unabhängig vom Temperaturmeßwert des Raumtemperaturmeßfühlers. Für den Korrekturwert maßgeblich ist ein weiterer Meßfühler, der ausschließlich durch die Wärmestrahlung des Speicherkerns beaufschlagt ist. Das Signal dieses weiteren Meßfühlers, der vom Gebläseluftstrom abgeschirmt ist und in unmittelbarer Nähe des Raumtemperatur-Meßfühlers angeordnet werden soll, ist ein reines Steuersignal, das von der Raumtemperaturregelung grundsätzlich unabhängig ist. Eine exakte und reproduzierbare Erfassung der Raumtemperatur für deren Vergleich mit dem Temperatursollwert ist diesem Stande der Technik nicht zu entnehmen.

Der Erfindung liegt die Aufgabe zugrunde, die Erfassung der Raumluft-Isttemperatur und damit die Raumtemperaturregelung bei einem Speicherheizgerät mit im Gerätegehäuse integrierten Meß- und Regelkomponenten weitgehend unabhängig von Speicherkerneinflüssen zu machen.

Zur Lösung dieser Aufgabe ist das Speicherheizgerät erfindungsgemäß dadurch gekennzeichnet, daß ein erster Temperaturfühler an einer von dem Speicherkern entfernt gelegenen Stelle im Innenraum des Gehäuses und außerhalb des Gebläseluftstroms derart angeordnet ist, daß er von der Raumtemperatur beeinflußt wird, daß wenigstens ein zweiter Temperaturfühler entfernt von dem ersten Temperaturfühler derart im Gehäuse angeordnet ist, daß sein Temperaturmeßwert für die Speicherkerntemperatur repräsentativ ist, und daß die ersten und zweiten Temperaturfühler in eine Korrektureinrichtung eingebunden sind, die aus den von den Temperaturfühlern abgeleiteten Signalen ein den Raumtemperatur-Istwert darstellendes Signal für einen Vergleich mit dem Raumtemperatur-Sollwert erzeugt, wobei wenigstens die Einschaltung des Gebläses von dem in der Korrektureinrichtung erzeugten Signal abhängig ist.

Verfahrensmäßig besteht die Lösung der Erfindungsaufgabe darin, daß im Gehäuse des Wärmespeicherheizgerätes eine für die Raumlufttemperatur repräsentative erste Temperatur und eine für die Speicherkerntemperatur bzw. den Lastzustand des Geräts repräsentative zweite Temperatur gemessen werden, daß aus der zweiten Temperatur, einem Raumlufttemperatursollwert und einer vorgegebenen Korrekturgröße eine Vergleichsgröße bestimmt und mit der ersten Temperatur verglichen wird und daß nach dem Vergleichsergebnis der Gebläsemotor geregelt wird.

Die vorgenannte Lösung basiert auf den folgend en Überlegungen: Jeder im Gerätegehäuse eingebaute Temperaturfühler wird durch unvermeidbare Konvektions- und Transmissionswärmezuflüsse aus dem Speicherkern beeinflußt und kann daher die für die Regelung erforderliche Raumluft-Isttemperatur nur qualitativ, nicht aber quantitativ in Zuordnung zu dem eingestellten Sollwert erfassen. Der Einfluß der Störgrößen infolge Konvektions-und Transmissionswärme aus dem Speicherkern wirkt sich vor allem stark bei stehendem Gebläse aus und ist proportional zur Temperatur des Speicherkerns und damit zum Ladezustand des Speicherheizgeräts. Diese Grundsätze gelten bei ausgeschaltetem Gebläse tendenziell gleich für alle Temperaturfühler, d.h. sowohl für solche, die von der Temperatur des Speicherkerns stark beeinflußt sind als auch für solche, die weniger stark beeinflußt sind. Insofern zeigen alle Temperaturfühler eine Übertemperatur gegenüber der Raumlufttemperatur an, wenn keine Zwangsluftumwälzung durch das Gebläse stattfindet. Die auf den Ladezustand des Speicherkerns bezogene Übertemperatur des der Raumtemperatur folgenden ersten Temperaturfühlers kann durch Vergleich mit der Übertemperatur des

2

ebenfalls und stärker ladezustandsabhängigen zweiten Temperaturfühlers zur Gewinnung des Istwerts der Raumlufttemperatur kompensiert werden. Die Kompensation ist gerätetechnisch einfach, da die Übertemperaturen beider Temperaturfühler in einem nahezu linearem Verhältnis stehen, das sich gerätespezifisch und anordnungsspezifisch ermitteln und voreinstellen läßt.

Die Erfindung ist mit besonderen Vorteilen bei den üblichen Zweipunktregelungen von Wärmespeicherheizgeräten einsetzbar, bei denen das Gebläse bei einem Wärmebedarf in dem zu beheizenden Raum zeitweilig eingeschaltet und nach Überschreiten des eingestellten Raumtemperatursollwerts ausgeschaltet wird. Um die Einschaltphasen des Gebläses zu minimieren und die Raumlufttemperatur bei möglichst geringen Regelausschlägen der Zweipunktregelung nahe am voreingstellten Sollwert zu halten, ist in Weiterbildung der Erfindung vorgesehen, daß eine mit dem Gebläse ein- und ausschaltbare Rückkopplungsschaltung mit dem ersten Temperaturfühler verbunden und derart ausgebildet ist, daß sie eine Störgröße im Sinne einer Temperaturerhöhung am ersten Temperaturfühler direkt oder indirekt in die Korrektureinrichtung einführt. Diese gegenüber den Meßbedingungen erhöhte Temperatur des ersten Temperaturfühlers verkürzt die Einschaltdauer des Gebläsemotors, da der Korrektureinrichtung eine gegenüber der Umgebungstemperatur des ersten Temperaturfühlers erhöhte Temperatur simuliert wird. In bevorzugter Ausführungsform ist die Rückkopplungsschaltung eine thermische Rückführung und weist einen Heizwiderstand auf, der mit dem ersten Temperaturfühler thermisch gekoppelt ist und diesen aufheizt.

Eine besonders genaue Erfassung des Raumlufttemperatur-Istwerts und damit eine präzise Temperaturregelung des Speicherheizgeräts auch bei kontinuierlichem Gebläsebetrieb läßt sich in Weiterbildung der Erfindung dadurch erreichen, daß ein dritter Temperaturfühler auf der Zuström- oder Abströmseite des Gebläses in der Vorkammer angeordnet ist und nach Einschaltung des Gebläses über eine Umschalteinrichtung anstelle der ersten und zweiten Temperaturfühler in die Anordnung zur Regelung der Raumtemperatur eingebunden wird. Der von dem Gebläse eingesaugte Kaltluftstrom spiegelt mit allenfalls kurzer Verzögerung den Raumlufttemperatur-Istwert weitgehend unbeeinflußt von der Speicherkerntemperatur wieder. Daher übernimmt der dritte Temperaturfühler die Temperaturregelung nach Gebläseeinschaltung bis zur Ausschaltung des Gebläses. Die Umschalteinrichtung schaltet nach Ausschaltung des Gebläses selbsttätig wieder um auf die ersten und zweiten Temperaturfühler, die danach die Regelung der Raumtemperatur bestimmen. Vorzugsweise ist die Umschalteinrichtung mit einem Verzögerungsglied gekoppelt, das die Umschaltung auf den dritten Temperaturfühler um eine vorgegebene Zeit nach Einschaltung des Gebläses verzögert. Diese Verzögerung ermöglicht dem dritten Temperaturfühler eine Anpassung an die Temperatur des Gebläseluftstroms und damit die korrekte Wiedergabe der Raumlufttemperatur.

Die Temperaturfühler sind vorzugsweise als temperaturabhängige Widerstände ausgebildet.

In einer besonders einfachen baulichen Realisierung der Erfindung sind die ersten und zweiten Temperaturfühler in zwei benachbarte Zweige einer Brückenschaltung eingebunden und über einen Verbindungsanschluß mit einem ersten Eingang einer Komparatorschaltung verbunden. Ein Vergleichseingang der Komparatorschaltung ist mit dem Ausgang des Raumtemperatur-Sollwertstellers verbunden. Der Gebläsemotor wird in Abhängigkeit von Signalen am Ausgang der Komparatorschaltung gesteuert, insbesondere ein- und ausgeschaltet.

Bei einer genaueren und deshalb bevorzugten Ausführungsform der Erfindung ist vorgesehen, daß der zweite Temperaturfühler und der Raumtemperatur-Sollwertsteller mit den Eingängen einer zur Korrektureinrichtung gehörigen Rechenschaltung verbunden sind, in der der Meßwert des zweiten Temperaturfühlers, der Sollwert und ein vorgegebener Korrekturwert rechnerisch zu einem Vergleichssignal verarbeitet werden, daß eine den Gebläsemotor steuernde Komparatorschaltung mit dem ersten Temperaturfühler und dem das Vergleichssignal liefernden Ausgang der Rechenschaltung verbunden und so ausgebildet ist, daß sie den Gebläsemotor einschaltet, wenn das Vergleichssignal größer als das Meßsignal des ersten Temperaturfühlers ist.

Zur genaueren Erfassung des Speichertemperaturprofils können mehrere zweite Temperaturfühler an unterschiedlichen Stellen im Gehäuse angeordnet sein, wobei die Meßsignale aller zweiten Temperaturfühler in einer Kombinationsschaltung vorzugsweise zu einem für die Speichertemperatur repräsentativen Mittelwert zusammengefaßt werden.

Der erste Temperaturfühler ist vorzugsweise in engem wärmeübertragenden Kontakt mit einer vom Speicherkern entfernten Gehäuseaußenwand angeordnet. Er kann durch wärmedämmende Mittel von dem Innenraum der Vorkammer isoliert sein, so daß auch Einflüsse durch den Gebläseluftstrom weitgehend vermieden werden. Zur Verminderung des Einflusses der Kerntemperatur auf den ersten Temperaturfühler kann die mit diesem in wärmeübertragendem Kontakt stehende Gehäusewand durch Isoliermittel vom anschließenden Teil des Gerätegehäuses thermisch isoliert sein.

Prinzipiell ebenfalls möglich ist eine Störgrößenaufschaltung auf den ersten Temperaturfühler bzw. auf dessen Temperaturmeßsignal derart, daß die oben erwähnte Übertemperatur in Abhängigkeit vom Ladezustand des Speicherkerns kompensiert wird.

In einfachster Ausführungsform könnte sogar ein einziger Temperaturfühler ausreichen, der sowohl den Ladezustand des Geräts als auch die Änderung der Raumlufttemperatur erfaßt, wobei dessen Übertemperatur durch einen gerätespezifisch programmierten Mikroprozessor kompensiert wird.

Im folgenden wird die Erfindung anhand von in der Zeichnung rein schematisch dargestellten Ausführungsbeispielen näher erläutert. In der Zeichnung zeigen:

Fig. 1       eine Prinzipdarstellung eines Wärmespeicherheizgeräts unter Darstellung einer möglichen Anordnung von Temperaturfühlern für die Regelung des Gebläsemotors und der bei ein-und ausgeschaltetem Gebläsemotor zu erwartenden Luft-und Wärmeströme;

Fig. 1A    eine schematische Ausschnittzeichnung zur Erläuterung der Anordnung eines die Raumtemperatur erfassenden Temperaturfühlers im Wärmespeicherheizgerät gemäß Fig. 1;

Fig. 2       ein Temperaturdiagramm der Übertemperaturen der in Fig. 1 dargestellten ersten und zweiten Temperaturfühler, aufgetragen über der Speicherkerntemperatur (Ladezustand);

Fig. 3       ein schematisches Schaltbild einer einfachen Anordnung zur Regelung der Raumlufttemperatur durch Zweipunktregelung des Gebläsemotors; und

Fig. 4       ein Fließbild eines anderen Ausführungsbeispiels der Anordnung zur Zweipunktregelung des Gebläsemotors.

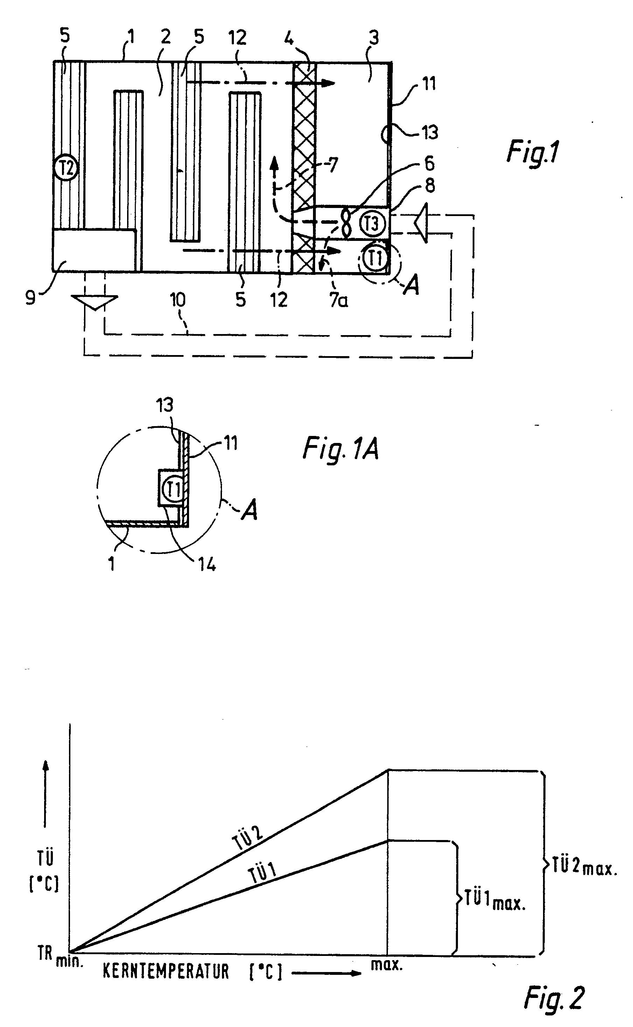

Das in Fig. 1 rein schematisch dargestellte Speicherheizgerät hat ein Gehäuse 1, das einen im dargestellten Ausführungsbeispiel in zwei Kammern 2 und 3 durch eine Trennwand 4 unterteilten Gehäuseinnenraum umschließt. In der Hauptkammer 2 des Gehäuses ist der Speicherkern mit Speichersteinen 5 und in der Zeichnung nicht dargestellten Heizelementen angeordnet; in den Speichersteinen sind labyrinthartige Führungskanäle für den von einem Gebläse 6 erzeugten Luftstrom 7 vorgesehen. Das Gebläse 6 ist in der durch die Trennwand 4 von der Hauptkammer 2 abgeteilten Vorkammer 3 angeordnet, in der auch die ebenfalls nicht dargestellte Beschaltung für die Heizelemente und den Gebläsemotor untergebracht ist. In der Schemadarstellung gemäß Fig. 1 sind die vor allem zum Gehäuse vorhandenen Isolierwände der Hauptkammer 2 aus Übersichtlichkeitsgründen fortgelassen. Der Gebläselufteintritt 8 ist bei üblichen Elektro-Speicherheizgeräten, z.B. dem unter dem Warenzeichen PERMATHERM 16 von der Firma Siemens AG angebotenen Elektro-Speicherheizgerät anders als in Fig. 8 an der Geräterückwand angeordnet; der angesaugte Luftstrom wird dabei über einen als Radialgebläse ausgebildeten Lüfter 6 zunächst in die Vorkammer 3 und von dort über mehrere Eintrittsöffnungen in die den Speicherkern aufnehmende Hauptkammer 2 eingeleitet. Die Austrittsöffnung 9, durch die die im Speicherheizgerät angewärmte Luft aus dem Gerätegehäuse austritt, ist entsprechend der Darstellung in Fig. 1 an der Frontseite des Geräts vorgesehen, und zwar an deren der Vorkammer 3 entfernten bodenseitigen Ende.

Mit gestrichelten Linien 10 ist eine Luftrückführung von dem Geräteauslaß 9 zu dem Einlaß 8 durch den zu beheizenden Raum veranschaulicht. Es ist klar, daß die im Speicherheizgerät aufgewärmte Luft nicht auf direktem Wege zu der auf der entgegengesetzten Seite des Geräts befindlichen Eintrittsöffnung zurückkehrt, sondern an der Eintrittsöffnung relativ kalte Raumluft aus dem Bodenbereich angesaugt wird.

Bei dem beschriebenen Ausführungsbeispiel sind im Gehäuse 1 drei Temperaturfühler T1, T2 und T3 integriert. Der erste Temperaturfühler T1 ist außerhalb des Strömungsbereichs der vom Gebläse 6 umgewälzten Luftströmung in der unteren rechten Ecke der Vorkammer 3 angeordnet und in wärmetauschender Beziehung mit der rechten Seitenwand 11 des Gehäuses 1 montiert. Die zweckmäßigste Lage des ersten Temperaturfühlers T1 kann sich je nach Geräteausführung ändern. Günstig ist es, wenn T1 möglichst weit entfernt von dem Speicherkern an einer Stelle in der Vorkammer angeordnet wird, an der der Einfluß der durch die strichpunktierten Pfeile 12 schematisch dargestellten Konvektions-und Transmissionswärme aus dem Speicherkern minimal ist. Der Temperaturfühler T1 ist, wie im Ausschnitt A der Fig. 1A deutlicher erkennbar ist, unmittelbar an der Seitenwand 11 montiert und folgt, gestört durch die Wärmezufuhr vom Speicherkern, den Temperaturänderungen der Raumluft an der Außenseite der Seitenwand 11. Zur thermischen Trennung der Seitenwand 11 von den anschließenden Gehäusewänden und damit zum Zwecke einer weiteren Minderung der Übertragung der Speicherkerntemperatur ist eine um die Anschlußstelle umlaufende Isolierscheibe 13 (Fig. 1A) vorgesehen. Außerdem kann der Temperaturfühler T1 in einem Isoliergehäuse 14 eingebaut sein, das T1 gegenüber der Vorkammer 3 thermisch isoliert und damit auch vor stärkeren Einflüssen der Gebläseströmung (Pfeil 7a) schützt.

Der Temperaturfühler T2 ist an einer Stelle im Innenraum des Gehäuses angeordnet, an der ein für die Kerntemperatur repräsentative Temperatur herrscht. Aus gerätetechnischen Gründen ist diese Temperatur wesentlich niedriger als die Temperatur des Kerns selbst; die Meßtemperatur von T2 liegt beispielsweise in einem Bereich zwischen 100° C und der Raumtemperatur entsprechend einer Kerntemperatur zwischen 600° C und Raumtemperatur. T2 kann an irgendeiner geeigneten Stelle beispielsweise an einer Innenwand der Hauptkammer 2 angeordnet sein. Er sollte ebenfalls außerhalb des Strömungsbereichs des Luftstroms 7 liegen.

Ein dritter Temperaturfühler T3 ist im dargestellten Ausführungsbeispiel im Ansaugstutzen des Gebläses 6 angeordnet und mißt demgemäß unmittelbar die Temperatur der durch die Eintrittsöffnung 8 angesaugten Kaltluft. Die von T3 erfaßte Temperatur entspricht daher im eingeschalteten Zustand des Gebläses 6 dem Istwert der Raumlufttemperatur.

In Fig. 2 ist rein schematisch der Verlauf der Übertemperaturen TÜ1 und TÜ2 der beiden Temperaturfühler T1 und T2, bezogen auf die Kerntemperatur veranschaulicht. Der Schnittpunkt der beiden hier als Geraden angenommenen Übertemperaturkennlinien liegt jeweils bei der Raumtemperatur TR und entspricht einer vollständigen Entladung des Speicherkerns bis auf die Raumtemperatur. In diesem Minimalzustand kann keine Erhöhung der Temperaturen durch Wärmeübertragung vom Kern auf die Temperaturfühler T1 und T2 stattfinden. Je stärker der Speicherkern aufgeladen, d.h. je höher die Kerntemperatur ist, umso stärker ist der Einfluß der Wärmeströme 12 vom Kern auf die beiden Temperaturfühler und umso höher sind die jeweiligen Übertemperaturen. Bei einem Versuchsaufbau betrug die maximale Übertemperatur TÜ1 $_{max}$ ca. 40°C und ie maximale Übertemperatur TÜ2 $_{max}$ ca. 70°C jeweils bei Vollaufladung des Speicherkerns und einer maximalen Kerntemperatur von ca. 600°C. Die dem zweiten Temperaturfühler T2 zugeordnete Übertemperaturkurve muß eine stärkere Steigung als die Übertemperaturkurve TÜ1 des ersten Temperaturfühlers T1 haben, da der zweite Temperaturfühler von der Kerntemperatur unmittelbarer und stärker beeinflußt wird.

Da sich TÜ1 und TÜ2 bei der Raumtemperatur TR schneiden, gelten folgende Beziehungen:

$$T1 = TR + TÜ1$$
$$T2 = TR + TÜ2$$
$$TÜ2/TÜ1 = K \qquad \ldots(1)$$

Das sich aus der Beziehung gemäß Gleichung (1) ergebende Verhältnis K der beiden Übertemperaturen kann für die Zwecke der vorliegenden Beschreibung als konstant angenommen werden; geringfügige Abweichungen insbesondere der Übertemperatur TÜ1 von der dabei unterstellten strengen Linearität lassen sich sowohl durch Eichung als auch durch an sich bekannte elektrische Maßnahmen problemlos kompensieren.

Ziel der Temperaturmessung mit den ersten und zweiten Fühlern T1 und T2 ist die quantitative Ermittlung des Raumtemperatur-Istwerts TR und dessen Vergleich mit dem von außen eingestellten Raumtemperatur-Sollwert TRS zur Regelung der Raumtemperatur. Bekannt sind die jeweils durch Messungen gewonnenen Temperaturen T1 und T2 (Temperaturbezeichnungen stimmen in der vorliegenden Beschreibung mit den entsprechenden Fühlerbezeichnungen überein), ferner der vorgegebene Temperatursollwert und das gerätespezifische und bereits vom Hersteller bestimmte Verhältnis K gemäß Gleichung (1). Aus diesen bekannten Größen läßt sich theoretisch die unbekannte Raumtemperatur TR wie folgt ableiten:

Im Regel-Arbeitspunkt (Fig. 2) ist TR = TRS. Für diesen Fall gilt:

$$TÜ2 = T2 - TRS \qquad \ldots(2)$$

Aus Gleichung (1):

$$TÜ1 = TÜ2/K \qquad \ldots(3)$$

Es folgt ein rechnerischer Wert T1* für die vom Fühler T1 gemessene Temperatur:

$$T1* = TRS + TÜ2/K \qquad \ldots(4)$$

Bei Vergleich des aus dem Meßwert T2 für den Arbeitspunkt auf der Basis von TRS abgeleiteten rechnerischen Werts T1* mit dem tatsächlich gemessenen Wert T1 ergibt sich eine Regelabweichung, die wie folgt zur Regelung des Gebläsemotors verwendet werden kann:

T1 < T1* - Gebläse EIN
T1 > T1* - Gebläse AUS

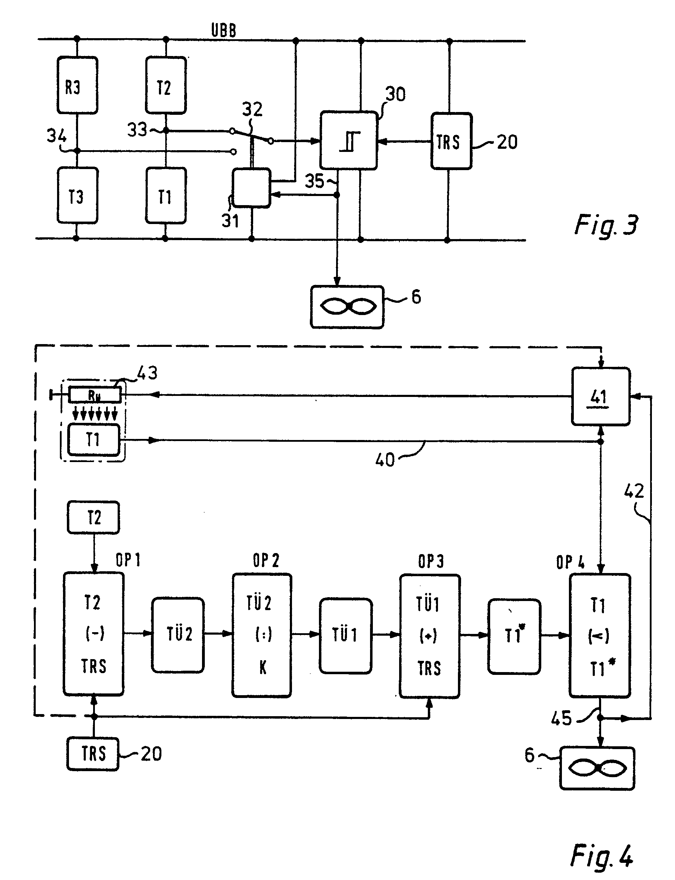

Diese Beziehungen sind in den in Figuren 3 und 4 als Prinzipschaltbilder dargestellten Anordnungen zur Gebläsemotorregelung realisiert.

Bei dem Ausführungsbeispiel gemäß Fig. 3 ist eine Brückenschaltung mit einem am Brückenabgriff angeordneten Komparator 30 vorgesehen. Der Komparator 30 erhält das dem Raumtemperatur-Sollwert entsprechende Signal TRS vom Sollwertsteller 20 und ein der Raumtemperatur entsprechendes I über einen Umschalter 32, dessen Stellung von einem Stellungsgeber 31 bestimmt ist. Im eingeschalteten Zustand des Gebläses 6 ist der Raumtemperatur-Istwert von den in benachbarten Brückenzweigen angeordneten ersten und zweiten Temperaturfühlern T1 und T2 bestimmt, deren Verbindungspunkt 33 mit dem Komparator 30 verbunden ist. Die Temperaturfühler sind in der Anordnung gemäß Fig. 3 durch NTC-Widerstände gebildet. Wenn das aus der Brückenschaltung der Temperaturfühler T1 und T2 abgeleitete Signal den Temperatur-Sollwert TRS aus dem Sollwertsteller 20 unterschreitet, wird der Motor des Gebläses 6 von dem Komparator 30 über die Leitung 35 eingeschaltet. Der Geber 31 ist an die Ausgangsleitung 35 des Komparators 30 angeschaltet und schaltet den Umschalter 32 gegebenenfalls nach einer vorgegebenen Zeitverzögerung auf den Verbindungspunkt 34 zwischen den ebenfalls in benachbarten Brückenzweigen angeordneten Widerständen T3 und R3 um. T3 ist der anhand von Fig. 1 beschriebene Temperaturfühler, der unmittelbar im Einflußbereich des vom Gebläse angesaugten Kaltluftstroms angeordnet ist. R3 ist ein Festwiderstand. Am Anschluß 34 spiegelt sich daher die Raumlufttemperatur wieder, die im Komparator 30 mit TRS verglichen wird. Übersteigt der Raumlufttemperatur-Istwert gemäß T3 den Sollwert, so wird die Ausgangsleitung 35 des Komparators 30 stromlos und der Gebläsebetrieb unterbrochen. Der Stellungsgeber 31 schaltet daraufhin den Umschalter unverzüglich wieder in die in Fig. 3 dargestellte Lage um, bei der die Temperaturfühler T1 und T2 für die Regelung maßgeblich sind.

Bei dem in Fig. 4 schematisch dargestellten weiteren Ausführungsbeispiel ist der oben in den Gleichungen (2) bis (4) angegebene Vorgang zur Verarbeitung von T2 und TRS zum Vergleichssignal T1* im Fließbild einer digitalen Rechenschaltung veranschaulicht. Die Rechenschaltung besteht im beschriebenen Beispiel aus mehreren in der Praxis in einem Chip zusammengefaßten Operationsverstärkern. Andere bauliche Realisierungen sind ohne weiteres möglich und in anderem Zusammenhang sowohl bei analogen als auch bei digitalen Rechenschaltungen bekannt.

In der ersten Stufe der Rechenschaltung (OP1) wird TRS von T2 zur Gewinnung von TÜ2 subtrahiert. In der zweiten Rechenstufe (OP2) wird TÜ2 durch die gerätespezifische Konstante K dividiert (Gleichung (3)), um TÜ1 zu gewinnen. Durch Addition des rechnerisch ermittelten TÜ1 und TRS in der dritten Rechenstufe (OP3) gewinnt man den Vergleichswert T1*. Der Vergleich dieses rechnerisch ermittelten Vergleichswerts mit dem effektiven Meßsignal T1 erfolgt in einem Vergleicher (OP4), der nach dem Ergebnis T1 kleiner oder größer T1* über eine Leitung 45 den Motor des Gebläses 6 ein- oder ausschaltet. Selbstverständlich kann auch bei dem Ausführungsbeispiel gemäß Fig. 4 nach dem Einschalten des Gebläses 6 über die Leitung 45 eine Übergabe der Temperaturregelung auf den Temperaturfühler T3 entsprechend der prinzipiellen Anordnung gemäß Fig. 3 erfolgen.

Bei dem Ausführungsbeispiel gemäß Fig. 4 ist zusätzlich eine Rückkopplungsschaltung 41 vorgesehen, die über die Leitung 42 bei eingeschaltetem Gebläsemotor wirksam gemacht wird und in Abhängigkeit von dem über die Leitung 40 zugeführten Meßsignal des ersten Temperaturfühlers T1 über einen Heizwiderstand 43 auf den Temperaturfühler T1 ein Störsignal wirken läßt. Der Heizwiderstand 43 ist thermisch mit dem Temperaturfühler T1 gekoppelt und sucht diesen während der Einschaltdauer des Gebläses 6 auf eine zunehmend höhere Temperatur zu ziehen. Dadurch wird die Einschaltphase des Gebläses 6 verkürzt, da der Temperaturfühler T1 über die Leitung 40 an den Komparator OP4 ein höheres Signal anlegt und damit einen höheren Temperatur-Istwert vortäuscht. Gegebenenfalls kann die thermische Rückführung 41 in zusätzlicher Abhängigkeit von dem Raumtemperatur-Sollwert TRS gesteuert werden, um die Regelung feinfühliger und genauer zu machen. Dies ist durch eine gestrichelte Verbindung zwischen dem Sollwertgeber 20 und der Rückkopplungsschaltung 4 1 dargestellt. Anstelle der in Fig. 4 dargestellten thermischen Rückführung kann selbstverständlich auch eine elektrische oder elektronische Rückführung vorgesehen werden, die ein geeignetes Störsignal dem Temperatursignal T1 auf der Leitung 40 überlagert. Die dazu erforderlichen Mittel sind dem Fachmann bekannt.

Die anhand von Fig. 4 beschriebene Rückkopplung ist in entsprechender Anordnung vor allem auch in dem Ausführungsbeispiel gemäß Fig. 3 zweckmäßig.

EP 0 260 629 B1

**Ansprüche**

1. Wärmespeicherheizgerät zur Beheizung von Räumen, mit einem Gehäuse (1), einem in wenigstens einer Hauptkammer des Gehäuses angeordneten Speicherkern (5), einem in einer Gehäuse-Vorkammer (3) angeordneten Gebläse (6) zur Zwangsumwälzung von Raumluft durch den Speicherkern und mit einer Anordnung zur Raumtemperaturregelung, die einen von außen bedienbaren Raumtemperatur-Sollwertsteller (20) und einen Temperaturfühler zur Bestimmung der Raumtemperatur aufweist und den Betriebszustand des Gebläses steuert,
   **dadurch gekennzeichnet,**
   daß ein erster Temperaturfühler (T1) an einer von dem Speicherkern (5) entfernt gelegenen Stelle im Innenraum des Gehäuses (1) und außerhalb des Gebläseluftstroms (7) derart angeordnet ist, daß er von der Raumtemperatur beeinflußt wird, daß wenigstens ein zweiter Temperaturfühler (T2) entfernt von dem ersten Temperaturfühler (T1) derart im Gehäuse (1) angeordnet ist, daß sein Temperaturmeßwert für die Speicherkerntemperatur repräsentativ ist, und daß die ersten und zweiten Temperaturfühler in eine Korrektureinrichtung (T1, T2, 30, 32, 33; OP1 ... OP4, 40) eingebunden sind, die aus den von den Temperaturfühlern (T1, T2) abgeleiteten Signalen ein den Raumtemperatur-Istwert (TR) darstellendes Signal für einen Vergleich mit dem Raumtemperatur-Sollwert (TRS) erzeugt, wobei wenigstens die Einschaltung des Gebläses (6) von dem in der Korrektureinrichtung erzeugten Signal abhängig ist.

2. Wärmespeicherheizgerät nach Anspruch 1, dadurch gekennzeichnet, daß eine mit dem Gebläse (6) ein- und ausschaltbare Rückkopplungsschaltung (41, 42, 43) mit dem ersten Temperaturfühler (T1) verbunden und derart ausgebildet ist, daß sie eine Störgröße im Sinne einer Temperaturerhöhung am ersten Temperaturfühler direkt oder indirekt in die Korrektureinrichtung (OP4) einführt.

3. Wärmespeicherheizgerät nach Anspruch 2, dadurch gekennzeichnet, daß die Rückkopplungsschaltung eine thermische Rückführung ist und einen Heizwiderstand (43) aufweist, der mit dem ersten Temperaturfühler (T1) thermisch gekoppelt ist und diesen aufheizt.

4. Wärmespeicherheizgerät nach einem der Ansprüche 1 bis 3, dadurch gekennzeichnet, daß ein dritter Temperaturfühler (T3) auf der Zuström- oder Abströmseite des Gebläses (6) in der Vorkammer (3) angeordnet ist, daß mit der Korrektureinrichtung (30) eine Umschalteinrichtung (31, 32) gekoppelt ist, die in Abhängigkeit von dem Schaltzustand des Gebläses (6) gesteuert und so ausgebildet ist, daß sie einen die ersten und zweiten Temperaturfühler (T1, T2) enthaltenden Meßzweig wenigstens bis zur Einschaltung des Gebläses in die Korrektureinrichtung einbindet und danach so umschaltet, daß ein den dritten Temperaturfühler (T3) enthaltender weiterer Temperaturmeßzweig (R3, T3, 34) in die Korrektureinrichtung eingebunden ist.

5. Wärmespeicherheizgerät nach Anspruch 4, dadurch gekennzeichnet, daß der Umschalteinrichtung (31, 32) ein Verzögerungsglied zugeordnet ist, das die Umschaltung auf den dritten Temperaturfühler (T3) um eine vorgegebene Zeit nach Einschaltung des Gebläses (6) verzögert.

6. Wärmespeicherheizgerät nach einem der Ansprüche 1 bis 5, dadurch gekennzeichnet, daß die Temperaturfühler (T1, T2, T3) als temperaturabhängige Widerstände, insbesondere Heißleiter ausgebildet sind.

7. Wärmespeicherheizgerät nach Anspruch 6, dadurch gekennzeichnet, daß die ersten und zweiten Temperaturfühler (T1, T2) in zwei benachbarte Zweige einer Brückenschaltung (T1, T2, 33, 32, 30, 20) eingebunden und über einen Verbindungsanschluß (33) mit einem ersten Eingang einer Komparatorschaltung (30) verbunden sind, daß ein Vergleichseingang der Komparatorschaltung mit dem Ausgang des Raumtemperatur-Sollwertstellers (20) verbunden ist und daß das Gebläse (6) in Abhängigkeit von Signalen am Ausgang (35) der Komparatorschaltung steuerbar, insbesondere ein- und ausschaltbar ist.

8. Wärmespeicherheizgerät nach den Ansprüchen 4 und 7, dadurch gekennzeichnet, daß der dritte Temperaturfühler (T3) und ein Festwiderstand (R3) miteinander verbunden und über die Umschalteinrichtung (32) anstelle der ersten und zweiten Temperaturfühler (T1, T2) in die Brückenschaltung einschaltbar sind.

9. Wärmespeicherheizgerät nach einem der Ansprüche 1 bis 6, dadurch gekennzeichnet, daß der zweite

7

Temperaturfühler (T2) und der Raumtemperatur-Sollwertsteller (20) mit den Eingängen einer zur Korrektureinrichtung gehörigen Rechenschaltung (OP1 ... OP3) verbunden sind, in der der Meßwert des zweiten Temperaturfühlers (T2), der Sollwert (TRS) und ein vorgegebener Korrekturwert (K) zu einem rechnerischen Vergleichssignal (T1*) verarbeitet werden, daß eine den Gebläsemotor steuernde Komparatorschaltung (OP4) mit dem ersten Temperaturfühler (T1) und dem das Vergleichssignal liefernden Ausgang der Rechenschaltung verbunden und so ausgebildet ist, daß sie (OP4) den Gebläsemotor einschaltet, wenn das Vergleichssignal (T1*) größer als das Meßsignal (T1) des ersten Temperaturfühlers ist.

10. Wärmespeicherheizgerät nach Anspruch 9, dadurch gekennzeichnet, daß die Rechenschaltung und die Komparatorschaltung eine Reihe von Operationsverstärkern aufweisen.

11. Wärmespeicherheizgerät nach einem der Ansprüche 1 bis 10, dadurch gekennzeichnet, daß zur genaueren Erfassung des Speicherkern-Temperaturprofils mehrere zweite Temperaturfühler (T2) an unterschiedlichen Stellen im Gehäuse (1) angeordnet sind und daß die Meßsignale aller zweiten Temperaturfühler in einer Kombinationsschaltung zu einem für die Speicherkerntemperatur repräsentativen Wert, insbesondere Mittelwert, zusammengefaßt sind.

12. Wärmespeicherheizgerät nach einem der Ansprüche 1 bis 11, dadurch gekennzeichnet, daß der erste Temperaturfühler (T1) in wärmeübertragendem Kontakt mit einer vom Speicherkern (5) entfernten Gehäuseaußenwand (11) angeordnet ist.

13. Wärmespeicherheizgerät nach Anspruch 12, dadurch gekennzeichnet, daß der erste Temperaturfühler (T1) im Bereich des unteren Endes der Gehäuseaußenwand (11) montiert ist.  -

14. Wärmespeicherheizgerät nach Anspruch 12 oder 13, dadurch gekennzeichnet, daß der erste Temperaturfühler (T1) durch wärmedämmende Mittel (14) von dem Innenraum der Vorkammer (3) im wesentlichen isoliert ist.

15. Wärmespeicherheizgerät nach einem der Ansprüche 12 bis 14, dadurch gekennzeichnet, daß die mit dem ersten Temperaturfühler (T1) in wärmeübertragendem Kontakt stehende Gehäusewand (11) durch Isoliermittel (13) vom anschließenden Teil des Gehäuses (1) thermisch isoliert ist.

16. Verfahren zur Regelung der Raumtemperatur durch Regelung des Gebläsemotors eines Wärmespeicherheizgeräts nach einem der Ansprüche 1 bis 15, dadurch gekennzeichnet, daß im Gehäuse des Wärmespeicherheizgeräts eine für die Raumtemperatur repräsentative erste Temperatur (T1) und eine für die Speicherkerntemperatur bzw. den Ladezustand des Geräts repräsentative zweite Temperatur (T2) gemessen werden, daß aus der zweiten Temperatur, einem Raumtemperatur-Sollwert (TRS) und einer vorgegebenen Korrekturgröße (K) eine Vergleichsgröße (T1*) bestimmt und mit der ersten Temperatur (T1) verglichen wird und daß nach dem Vergleichsergebnis der Gebläsemotor geregelt wird.

17. Verfahren nach Anspruch 16, dadurch gekennzeichnet, daß die erste Temperaturmessung mit einer Störgröße beaufschlagt wird, die den Meßwert (T1) zu erhöhen sucht, wenn der Gebläsemotor eingeschaltet ist.

18. Verfahren nach Anspruch 17, dadurch gekennzeichnet, daß die Störgrößenaufschaltung durch thermische Rückführung unter Beheizen eines ersten Temperaturfühlers erfolgt.

19. Verfahren nach einem der Ansprüche 16 bis 18, dadurch gekennzeichnet, daß als vorgegebene Korrekturgröße eine Konstante eingegeben wird.

20. Verfahren nach einem der Ansprüche 16 bis 19, dadurch gekennzeichnet, daß nach dem Einschalten des Gebläsemotors bis zu dessen Ausschaltung die Temperaturregelung über einen im Gebläse-Kaltluftstrom angeordneten Temperaturfühler erfolgt.

**Claims**

1. Storage heater for heating spaces, including a housing (1), a storage core (5) arranged in at least one main chamber of the housing, a blower (6) arranged in an antechamber (3) of the housing for the forced circulation of air from the space through the storage core and with an arrangement for controlling the temperature of the space which has an externally operable control element (20) for the desired value of the temperature of the space and a temperature sensor for determining the temperature of the space and controls the operational state of the blower, characterised in that a first temperature sensor (T1) is so arranged at a position remote from the storage core (5) in the interior of the housing (1) and outside the blower air flow (7) that it is subjected to the temperature of the space, that at least one second temperature sensor (T2) is so arranged in the housing (1) remote from the first temperature sensor (T1) that its measured temperature value is representative of the storage core temperature and that the first and second temperature sensors are incorporated into a correction device (T1,T2,30,32,33;OP1...OP4,40) which produces a signal representative of the actual value (TR) of the temperature of the space for comparison with the desired value (TRS) of the temperature of the space from the signals derived from the temperature sensors (T1,T2), whereby at least the switching-on of the blower (6) is dependent on the signal produced in the correction device.

2. Storage heater as claimed in claim 1, characterised in that a feedback circuit (41,42,43), which may be switched in and out with the blower (6), is connected to the first temperature sensor (T1) and so constructed that it feeds a disturbance variable in the sense of a temperature increase at the first temperature sensor directly or indirectly into the correction device (OP4).

3. Storage heater as claimed in claim 2, characterised in that the feedback circuit is a thermal feedback and has a heating resistance (43) which is thermally coupled with the first temperature sensor (T1) and heats it.

4. Storage heater as claimed in one of claims 1 to 3, characterised in that a third temperature sensor (T3) is arranged in the antechamber (3) on the upstream or downstream side of the blower (6), that coupled with the correction device (30) there is a switch-over device (31,32) which is controlled in dependence on the switching state of the blower (6) and so constructed that it connects a measuring arm including the first and second temperature sensors (T1,T2) to the correction device at least until the blower switches on and thereafter switches over so that a further temperature measuring arm (R3,T3,34) including the third temperature sensor (T3) is connected to the correction device.

5. Storage heater as claimed in claim 4, characterised in that associated with the switch-over device (31,32) there is a delay element which delays the switching-over to the third temperature sensor (T3) by a predetermined time after switching on of the blower (6).

6. Storage heater as claimed in one of claims 1 to 5, characterised in that the temperature sensors (T1,T2,T3) are constructed as temperature-dependent resistances, particularly hot conductors.

7. Storage heater as claimed in claim 6, characterised in that the first and second temperature sensors (T1,T2) are connected in two adjacent branches of a bridge circuit (T1,T2,33,32,30,20) and are connected via a connection (33) with the first input of a comparator circuit (30), that a comparison input of the comparator circuit is connected to the output of the control element (20) for the desired value of the temperature of the space and that the blower (6) is controllable, particularly switchable on and off, in dependence on signals at the output (35) of the comparator circuit.

8. Storage heater as claimed in claims 4 and 7, characterised in that the third temperature sensor (T3) and a fixed resistance (R3) are connected together and may be switched into the bridge circuit by means of the switch-over device (32) instead of the first and second temperature sensors (T1,T2).

9. Storage heater as claimed in one of claims 1 to 6, characterised in that the second temperature sensor (T2) and the control element (20) for the desired value of the temperature of the space are connected to the inputs of a calculating circuit (OP1...OP3) which forms part of the correction device and in which the measured value of the second temperature sensor (T2), the desired value (TRS) and a predetermined correction value (K) are processed into a calculated comparison signal (T1*), that a comparator circuit (OP4) controlling the blower motor is connected to the first temperature sensor (T1) and the output of the calculating circuit which supplies the comparison signal and is so constructed that it (OP4) switches on the blower motor when the comparison signal (T1*) is larger than the measured signal (T1) of the first temperature sensor.

10. Storage heater as claimed in claim 9, characterised in that the calculating circuit and the comparator circuit have a series of operational amplifiers.

11. Storage heater as claimed in one of claims 1 to 10, characterised in that a plurality of second temperature sensors (T2) are arranged at different positions in the housing (1) for the purpose of more exactly determining the temperature profile of the storage core and that the measured measurement signals of all the second temperature sensors are combined in a combination circuit into a value, particularly a mean value, representative of the storage core temperature.

12. Storage heater as claimed in one of claims 1 to 11, characterised in that the first temperature sensor (T1) is arranged in heat-transferring contact with an external wall (11) of the housing remote from the storage core (5).

13. Storage heater as claimed in claim 12, characterised in that the first temperature sensor (T1) is mounted in the vicinity of the lower end of the outer wall (11) of the housing.

14. Storage heater as claimed in claim 12 or 13, characterised in that the first temperature sensor (T1) is substantially isolated from the interior of the antechamber (3) by heat-insulating means (14).

15. Storage heater as claimed in one of claims 12 to 14, characterised in that the housing wall (11), which is in heat-transferring contact with the first temperature sensor (T1), is thermally isolated from the adjacent portion of the housing (1) by insulating means (13).

16. Method of controlling the temperature of a space by controlling the blower motor of a storage heater as claimed in one of claims 1 to 15, characterised in that within the housing of the storage heater a first temperature (T1) representative of the temperature of the space and a second temperature (T2) representative of the storage core temperature or the charging state of the device are measured, that a comparison value (T1*) is determined from the second temperature, a desired value (TRS) of the temperature of the space and a predetermined correction value (K) and is compared with the first temperature (T1) and that the blower motor is controlled in accordance with the result of the comparison.

17. Method as claimed in claim 16, characterised in that the disturbance value is applied to the first temperature measurement which tends to increase the measured value (T1) when the blower motor is switched on.

18. Method as claimed in claim 17, characterised in that the switching in of the disturbance value is effected by thermal feedback whilst heating a first temperature sensor.

19. Method as claimed in one of claims 16 to 18, characterised in that a constant is input as the predetermined correction value.

20. Method as claimed in one of claims 16 to 19, characterised in that after switching on the blower motor until it is switched off the temperature control is effected by means of a temperature sensor arranged in the blower cold air flow.

## Revendications

1. Appareil de chauffage des locaux à accumulation comportant un carter (1), un noyau accumulateur (5) placé dans au moins une chambre principale de ce carter, un ventilateur (6) placé dans une antichambre (3) du carter pour la circulation forcée de l'air du local à travers le noyau accumulateur et un dispositif de régulation de la température du local qui comporte un ajusteur de valeur prescrite de la température du local (20) manoeuvrable de l'extérieur et un capteur de température pour la détermina-

10

EP 0 260 629 B1

tion de la température du local et commande l'état de fonctionnement du ventilateur, caractérisé par le fait qu'un premier capteur de température (T1) est placé à l'intérieur du carter (1) à l'extérieur du courant d'air (7) du ventilateur à un endroit éloigné du noyau accumulateur (5) de façon telle qu'il soit influencé par la température du local, qu'au moins un deuxième capteur de température (T2) est placé dans le carter (1) loin du premier (T1) de façon telle que sa valeur mesurée de température soit représentative de la température du noyau accumulateur, et que les premier et deuxième capteurs de température sont intégrés à un dispositif correcteur (T1, T2, 30, 32, 33; OP1 à OP4, 40) qui produit à partir des signaux tirés des capteurs de température (T1, T2) un signal représentant la valeur instantanée (TR) de la température du local pour une comparaison avec la valeur prescrite (TRS) de cette température, au moins la mise en marche du ventilateur (6) dépendant du signal produit dans le dispositif correcteur.

2. Appareil de chauffage à accumulation selon la revendication 1, caractérisé par le fait qu'un circuit de réaction (41, 42, 43) pouvant être connecté au et déconnecté du ventilateur (6) est relié au premier capteur de température (T1) et agencé de façon telle qu'il introduise directement ou indirectement dans le dispositif correcteur (OP4) une grandeur perturbatrice dans le sens d'une élévation de température au premier capteur de température.

3. Appareil de chauffage à accumulation selon la revendication 2, caractérisé par le fait que le circuit de réaction est un retour thermique et comporte une résistance chauffante (43) qui est accouplée thermiquement au premier capteur de température (T1) et le chauffe.

4. Appareil de chauffage à accumulation selon l'une des revendications 1 à 3, caractérisé par le fait qu'un troisième capteur de température (T3) est placé dans l'antichambre (3) du côté arrivée ou du côté départ du ventilateur (6), qu'au dispositif correcteur (30) est accouplé un dispositif commutateur (31, 32) qui est commandé en fonction de l'état de fonctionnement du ventilateur (6) et agencé de façon à intégrer au dispositif correcteur, au moins jusqu'à la mise en marche du ventilateur, une branche de mesure contenant les premier et deuxième capteurs de température (T1, T2) et ensuite commuter de façon qu'une autre branche de mesure de température (R3, T3, T4) contenant le troisième capteur de température (T3) soit intégrée au dispositif correcteur.

5. Appareil de chauffage à accumulation selon la revendication 4, caractérisé par le fait qu'au dispositif commutateur (31, 32), est adjoint un organe de retard qui retarde la commutation sur le troisième capteur de température (T3) d'un temps fixé après mise en marche du ventilateur (6).

6. Appareil de chauffage à accumulation selon l'une des revendications 1 à 5, caractérisé par le fait que les capteurs de température (T1, T2, T3) sont des résistances dépendant de la température, en particulier des thermistances.

7. Appareil de chauffage à accumulation selon la revendication 6, caractérisé par le fait que les premier et deuxième capteurs de température (T1, T2) sont intégrés à deux branches d'un pont (T1, T2, 33, 32, 30, 20) voisines et sont reliés par une connexion (33) à une première entrée d'un circuit comparateur (30), qu'une entrée de comparaison de ce circuit comparateur est reliée à l'ajusteur de valeur prescrite de la température du local (20) et que le ventilateur (6) peut être commandé, en particulier mis en marche et arrêté, en fonction de signaux à l'entrée (35) du circuit comparateur.

8. Appareil de chauffage à accumulation selon les revendications 4 et 7, caractérisé par le fait que le troisième capteur de température (T3) et une résistance fixe (R3) sont reliés entre eux et peuvent être mis dans le pont par l'intermédiaire du dispositif commutateur (32) à la place des premier et deuxième capteurs de température (T1, T2).

9. Appareil de chauffage à accumulation selon l'une des revendications 1 à 6, caractérisé par le fait que le deuxième capteur de température (T2) et l'ajusteur de valeur prescrite de la température du local (20) sont reliés aux entrées d'un circuit de calcul (OP1 à OP3) faisant partie du dispositif correcteur et dans lequel la valeur mesurée du deuxième capteur de température (T2), la valeur prescrite (TRS) et une valeur correctrice fixée (K) sont transformées en un signal de comparaison (T1*), qu'un circuit comparateur (OP4) commandant le moteur du ventilateur est relié au premier capteur de température (T1) et à la sortie du circuit de calcul fournissant le signal de comparaison et est agencé de façon à

11

mettre en marche le moteur du ventilateur lorsque le signal de comparaison (T1") est supérieur au signal de mesure (T1) du premier capteur de température.

10. Appareil de chauffage à accumulation selon la revendication 9, caractérisé par le fait que le circuit de calcul et le circuit comparateur comportent une série d'amplificateurs opérationnels.

11. Appareil de chauffage à accumulation selon l'une des revendications 1 à 10, caractérisé par le fait que, pour une saisie plus précise du profil de température du noyau accumulateur, plusieurs deuxièmes capteurs de température (T2) sont placés à différents endroits dans le carter (1), et que les signaux de mesure de tous les deuxièmes capteurs de température sont réunis dans un circuit combinateur en une valeur représentative de la température du noyau accumulateur, en particulier la moyenne.

12. Appareil de chauffage à accumulation selon l'une des revendications 1 à 11, caractérisé par le fait que le premier capteur de température (T1) est placé en contact de transmission de chaleur avec une paroi extérieure (11) du carter éloignée du noyau accumulateur (5).

13. Appareil de chauffage à accumulation selon la revendication 12, caractérisé par le fait que le premier capteur de température (T1) est monté dans la zone de l'extrémité inférieure de la paroi extérieure (11) du carter.

14. Appareil de chauffage à accumulation selon l'une des revendications 12 et 13, caractérisé par le fait que le premier capteur de température (T1) est dans une large mesure isolé de l'intérieur de l'antichambre (3) par des moyens d'isolation thermique (14).

15. Appareil de chauffage à accumulation selon l'une des revendications 12 à 14, caractérisé par le fait que la paroi (11) du carter en contact de transmission de chaleur avec le premier capteur de température (T1) est isolée thermiquement de la partie contiguë du carter (1) par des moyens d'isolation (13).

16. Procédé de régulation de la température des locaux par régulation du moteur du ventilateur d'un appareil de chauffage à accumulation selon l'une des revendications 1 à 15, caractérisé par le fait que dans le carter de l'appareil de chauffage à accumulation sont mesurées une première température (T1) représentative de la température du local et une deuxième température (T2) représentative de la température du noyau accumulateur ou de l'état de charge de l'appareil, qu'une grandeur de comparaison (T1") est déterminée à partir de la deuxième température, d'une valeur prescrite de la température du local (TRS) et d'une grandeur correctrice fixée (K) et comparée à la première température (T1), et que le moteur du ventilateur est réglé d'après le résultat de la comparaison.

17. Procédé selon la revendication 16, caractérisé par le fait que la première mesure de température est soumise à l'action d'une grandeur perturbatrice qui tend à augmenter la valeur mesurée (T1) quand le moteur du ventilateur est en marche.

18. Procédé selon la revendication 17, caractérisé par le fait que l'addition de la grandeur perturbatrice est faite par retour thermique avec chauffage d'un premier capteur de température.

19. Procédé selon l'une des revendications 16 à 18, caractérisé par le fait que comme grandeur perturbatrice fixée est introduite une constante.

20. Procédé selon l'une des revendications 16 à 19, caractérisé par le fait qu'après la mise en marche du moteur du ventilateur et jusqu'à l'arrêt de celui-ci, la régulation de la température est faite par l'intermédiaire d'un capteur de température placé dans le courant d'air froid du ventilateur.

Fig.1

Fig.1A

Fig.2

Fig. 3

Fig. 4